# EUROPEAN PATENT APPLICATION

(11) **EP 3 453 887 A1**
(43) Date of publication of application: **13.03.2019**
(21) Application number: 18188539.3
(22) Date of filing: 10.08.2018
(51) Int. Cl.: F04D 25/16, F04D 29/08, F04D 29/42, F04D 29/62, B60H 1/00

(54) **CENTRIFUGAL BLOWER UNIT FOR IN-VEHICLE AIR CONDITIONER**

(30) Priority: 06.09.2017 JP 2017171368
(71) Applicant: Valeo Japan Co., Ltd., Saitama 360-0193 (JP)
(72) Inventor: HAYASHI, Naoto, SAITAMA, 360-0193 (JP); SHICHIKEN, Yutaka, SAITAMA, 360-0193 (JP)
(74) Representative: Metz, Gaëlle

(57) **Abstract**

In an impeller wheel of a centrifugal blower unit, edge parts of first blades present radially outward are positioned inward of a wall edge part facing the impeller wheel of a partitioning wall. In addition, an edge part of a dividing member that separates spaces between a plurality of first blades from spaces between a plurality of second blades of the impeller wheel present radially outward is positioned outward of a wall edge part of the partitioning wall and closer to the other end side in the axial direction than the wall edge part.

## Description

### BACKGROUND OF THE INVENTION

### 1. Field of the Invention

The present invention relates to a centrifugal blower unit to be applied to a two-layer flow type in-vehicle air conditioner.

### 2. Description of the Related Art

A single suction type blower unit having a separation cylinder is known as a centrifugal blower unit to be applied to an in-vehicle air conditioner (see Patent Literature 1, for example). When an air conditioner is operated in an inside air/outside air two-layer flow mode, a single suction type blower unit separates the flow passage through which vehicle cabin outside air passes from the flow passage through which vehicle cabin inside air passes using separation cylinder and guides the outside air and the inside air to the upper half part and the lower half part of an impeller wheel, respectively. The internal space of a scroll housing in which the impeller wheel is accommodated is divided into the upper air flow passage and the lower air flow passage by a circumferential partitioning wall, and the outside air and the inside air having been guided to the impeller wheel are blown out toward the upper air flow passage and the lower air flow passage, respectively. In this way, the outside air and the inside air are blown toward different blowing channels.

By the way, in such a blower unit, part of the outside air having been guided to the upper half part of the impeller wheel by the separation cylinder may flow to the lower air flow passage and the outside air may be mixed into the inside air flowing through the lower air flow passage. To solve such a problem, the impeller wheel is provided with a dividing member that divides the spaces between blades thereof into the upper part and the lower part in Patent Literature 1. The dividing member extends to a position above the partitioning wall to prevent the outside air from flowing to the lower air flow passage.

In this case, however, part of the inside air having been guide to the lower half part of the impeller wheel may flow to the upper air flow passage through the space between the dividing member and the partitioning wall from below the dividing member. When the air conditioner is operated in the inside air/outside air two-layer flow mode, outside air having a low humidity that flows through the upper air flow passage is fed to the front window to prevent the front glass from being fogged by water vapor contained in vehicle cabin inside air. Accordingly, mixture of the inside air having a high humidity into the outside air flowing through the upper air flow passage may reduce the effect of anti-fogging the front glass required for the air conditioner operated in the inside air/outside air two-layer flow mode.

In addition, the impeller wheel having the dividing member that extends to a position above the partitioning wall has a problem when the impeller wheel is assembled into the scroll housing. That is, the impeller wheel is generally inserted into the scroll housing from the side (from below the partitioning wall) opposite to the suction port of the scroll housing and assembled to the scroll housing. However, since the outer diameter of the dividing member provided in the impeller wheel is larger than the inner diameter of the circumferential partitioning wall that separates the upper air flow passage from the lower air flow passage, it is impossible to dispose the dividing member above the partitioning wall through the inside region surrounded by the inner peripheral part of the partitioning wall.

[Patent Literature 1] JP-A-2003-301794

### SUMMARY OF THE INVENTION

An object of the invention is to provide a single suction type centrifugal blower unit for a two-layer flow type air conditioner in which an impeller wheel can be assembled into a scroll housing from the side opposite to the suction port of the scroll housing and separation between damp air and dry outside air is improved.

According to an preferred embodiment of the invention, there is provided a single suction type centrifugal blower unit for a vehicle, the centrifugal blower unit characterized by including a motor; an impeller wheel rotationally driven about a rotational axis line extending in an axial direction by the motor, the impeller wheel including a plurality of first blades forming a peripheral direction first blade row, a plurality of second blades forming a peripheral direction second blade row and having one ends in the axial direction that face the other end in the axial direction of the first blade row, the impeller wheel blowing out air in a space radially inward of the first blade row and the second blade row in a centrifugal direction by be rotationally driven; a dividing member formed circumferentially between the first blade row and the second blade row, the dividing member separating spaces between the plurality of first blades from spaces between the plurality of second blades; a scroll housing including an inner space in which the impeller wheel is accommodated, a suction port opened to one end side in the axial direction, and a discharge port opened in a peripheral direction; a partitioning wall dividing, in the axial direction, a region between an inner peripheral surface of the scroll housing and an outer peripheral surface of the impeller wheel of the inner space of the scroll housing and an inner space of the discharge port to form a first air flow path facing the first blade row and a second air flow path facing the second blade row; and a separation cylinder passing radially inward of the suction port and radially inward of the first blade row and extending in the axial direction, the separation cylinder being provided so as to divide a flow of air sucked from the suction port to the scroll housing into a first air flow passing outside the separation cylinder and a second air flow passing inside the separation cylinder, the separation cylinder having an exit side end part that redirects the first air flow to a radially outward direction and guides the redirected first air flow to the first air flow path and redirects the second air flow to a radially outward direction and guides the redirected second air flow to the second air flow path, in which, in a radial direction of the impeller wheel, edge parts of the first blades present radially outward are positioned inward of a wall edge part facing the impeller wheel of the partitioning wall and an edge part of the dividing member present radially outward is positioned outward of the wall edge part and closer to the other end side in the axial direction than the wall edge part.

According to the embodiment of the invention described above, it is possible to assemble the impeller wheel into the scroll housing from the side opposite to the suction port of the scroll housing and improve separation between damp inside air and dry outside air.

### BRIEF DESCRIPTION OF THE DRAWINGS

Fig. 1 is a longitudinal sectional view illustrating the structures of a centrifugal blower unit and an air intake part of an air conditioner and including a meridian cross section of the centrifugal blower unit.
Fig. 2 is a longitudinal sectional view illustrating the structures of the centrifugal blower unit and the air intake part of the air conditioner, taken along a plane orthogonal to the cross section in Fig. 1.
Fig. 3 is a meridian cross sectional view illustrating the main part of the centrifugal blower unit according to the first embodiment.
Fig. 4 illustrates how to assemble the impeller wheel illustrated in Fig. 1 to Fig. 3 into the scroll housing.
Fig. 5 is a meridian cross sectional view illustrating the main part of a centrifugal blower unit according to a second embodiment.
Fig. 6 is a meridian cross sectional view illustrating the main part of a centrifugal blower unit according to a third embodiment.
Fig. 7 is a meridian cross sectional view illustrating the main part of a centrifugal blower unit according to a fourth embodiment.
Fig. 8 corresponds to Fig. 7 and illustrates a modification of the extended connection part illustrated in Fig. 7.

### DESCRIPTION OF THE PREFERRED EMBODIMENTS

### [First embodiment]

The first embodiment of the invention will be described below with reference to the drawings.

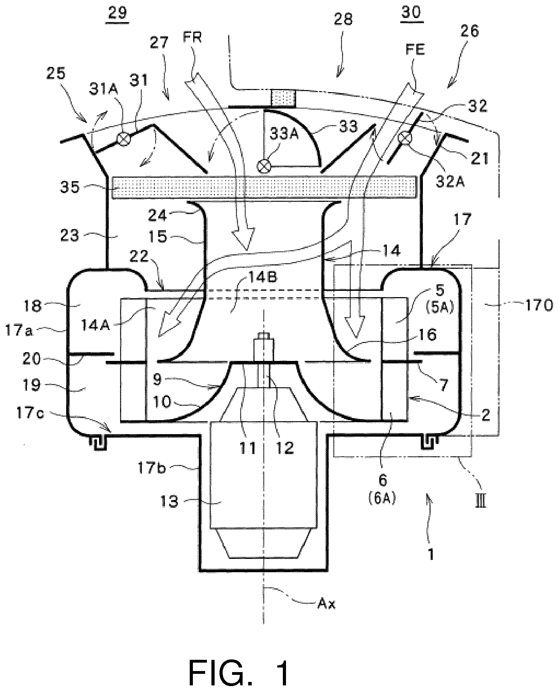

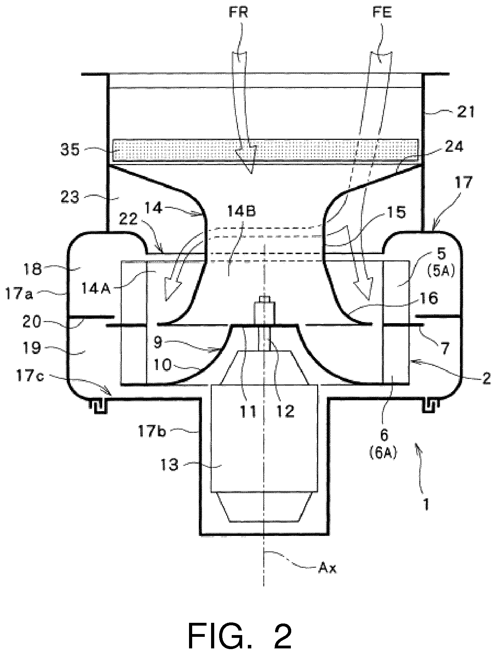

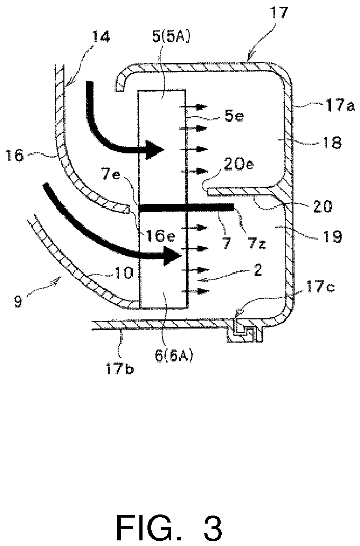

Fig. 1 and Fig. 2 are cross sectional views illustrating the structure of the periphery of the centrifugal blower unit and the air intake part of the in-vehicle air conditioner. In addition, Fig. 3 is an enlarged view illustrating the region surrounded by the dot-dot-dash line indicated by a reference numeral III in Fig. 1.

A centrifugal blower unit 1 according to the embodiment is a single suction type centrifugal blower unit for a two-layer flow type air conditioner and is used for an in-vehicle air conditioner. This air conditioner includes a defroster blowout port (not illustrated), a vent blowout port (not illustrated), and a foot blowout port (not illustrated) and these blowout ports blow air to the front window of a vehicle, the upper bodies of occupants, and the feet of occupants, respectively

As illustrated in Fig. 1 and Fig. 2, the centrifugal blower unit 1 includes a motor 13, an impeller wheel 2 rotationally driven about a rotational axis line Ax extending in the axial direction by the motor 13, and a scroll housing 17 in which the impeller wheel 2 is accommodated.

In this specification, for descriptive convenience, the direction of the rotational axis line Ax is referred to as the axial direction or the up-down direction. The upper side and the lower side in Fig. 1 and Fig. 2 are referred to as "one end side in the axial direction" or "the upper side in the axial direction" and "the other end side in the axial direction" or "the lower side in the axial direction", respectively. However, this does not cause the direction of the rotational axis line Ax to coincide with the orthogonal direction when the air conditioner is actually assembled to a vehicle. In addition, unless otherwise specified, the direction of the radius of a circle drawn on a plane orthogonal to the rotational axis line Ax about any point in the rotational axis line Ax is referred to as the radial direction and the circumferential direction of this circle is referred to as the peripheral direction or the circumferential direction.

The impeller wheel 2 has a plurality of first blades 5 that forms a first blade row 5A arranged in the peripheral direction and a plurality of second blades 6 that forms a second blade row 6A arranged in the peripheral direction. The first blade row 5A and the second blade row 6A are arranged in the axial direction. One ends in the axial direction of the second blades 6 face the other ends in the axial direction of the first blade row 5A. The impeller wheel 2 is rotationally driven to blow air present radially inward of the first blade row 5A and the second blade row 6A to the centrifugal direction.

A dividing member 7 that separates the spaces between the plurality of first blades 5 from the spaces between the plurality of second blades 6 is disposed between the first blade row 5A and the second blade row 6A. The dividing member 7 is formed circumferentially along the blade rows 5A and 6A so as not to interfere with a separation cylinder 14 and an inside deflection member 9, which will be described later. In the example illustrated in Fig. 1 and Fig. 2, the dividing member 7 is formed integrally with the first blade row 5A and the second blade row 6A.

The impeller wheel 2 includes the inside deflection member 9 formed integrally with the impeller wheel 2. The inside deflection member 9 may also be referred to as a cone part. This inside deflection member 9 is a rotating body geometrically and includes a side peripheral part 10 and a discoid central part 11. The side peripheral part 10 is coupled to the other end in the axial direction of the second blade row 6A. In addition, the central part 11 is coupled to a rotational shaft 12 of the motor 13. In this way, the inside deflection member 9 couples the impeller wheel 2 to the rotational shaft 12 of the motor 13. The inside deflection member 9 forms a passage for the second air flow between the inside deflection member 9 and an exit side end part 16 of the separation cylinder 14.

In the example illustrated in Fig. 1 and Fig. 2, the side peripheral part 10 is bent so that the outline in the meridian cross section of the outer peripheral surface of the side peripheral part 10 is inclined more steeply toward the central part 11. In anther example (not illustrated), the outline in the meridian cross section of the outer peripheral surface of the side peripheral part 10 may not be bent (the cross section is linear) toward the second blade row 6A from the central part 11.

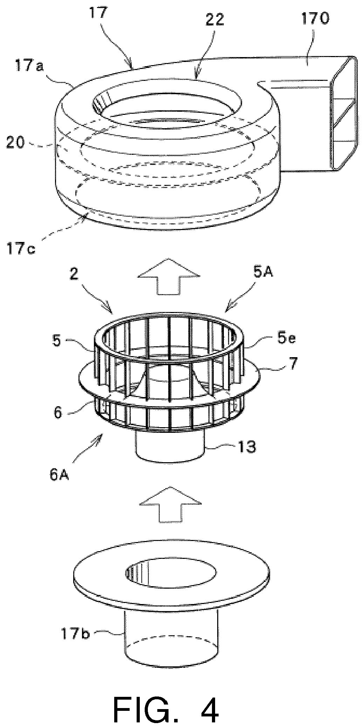

The scroll housing 17 includes a scroll body part 17a having an inner space in which the impeller wheel 2 accommodate and a scroll bottom part 17b having an inner space in which the motor 13 is accommodated. The scroll body part 17a includes a suction port 22 opened to one end side in the axial direction, an opening 17c opened to the other end side in the axial direction, and a discharge port 170 opened in the peripheral direction. The diameter of the opening 17c is larger than the outer diameters of the first blade row 5A, the second blade row 6A, and the dividing member 7. This enables the impeller wheel 2 to be inserted into the scroll body part 17a through the opening 17c. As Fig. 4 illustrates, the discharge port 170 extends substantially in the direction tangential to the outer peripheral surface of the scroll body part 17a when the scroll body part 17a is seen from the axial direction. The discharge port 170 is not illustrated in Fig. 2. The scroll bottom part 17b is detachably mounted to the other end side of the scroll body part 17a so as to accommodate the motor 13 in the inner space thereof and block the opening 17c.

The scroll body part 17a has a circumferential partitioning wall 20 extending radially inward from the inner peripheral surface of the scroll body part 17a. This partitioning wall 20 divides, in the axial direction (in the up-down direction), the region between the inner peripheral surface of the scroll body part 17a and the outer peripheral surface of the impeller wheel 2 of the inner space of the scroll body part 17a and the inner space of the discharge port 170 to form an upper first air flow path 18 and a lower second air flow path 19 that extend in the peripheral direction along the inner peripheral surface of the scroll body part 17a. The first air flow path 18 faces the first blade row 5A and the second air flow path 19 faces the second blade row.

The separation cylinder 14 is inserted into the scroll housing 17 via the suction port 22. As is clear from comparison between Fig. 1 and Fig. 2, the cross sectional shape of an entrance side end part (upper part) 24 of the separation cylinder 14 is substantially a rectangle. The cross sectional shape of a central part 15 of the separation cylinder 14 is a circle or substantially a circle. The cross sectional shape of the separation cylinder 14 gradually changes from a rectangle to a circle or substantially a circle toward the central part 15 from the entrance side end part 24. An exit side end part (lower part) 16 of the separation cylinder 14 has a flare shape with a diameter that increases toward the lower end and the lower end is circular.

The separation cylinder 14 passes radially inward of the suction port 22 and radially inward of the first blade row 5A of the impeller wheel 2 and extends in the axial direction. The entrance side end part 24 of the separation cylinder 14 is positioned outside (above the suction port 22 in the axial direction) the scroll housing 17. The exit side end part 16 of the separation cylinder 14 is disposed substantially in the same position in the axial direction as the dividing member 7. In the example illustrated in Fig. 3, an edge part 16e of the exit side end part 16 of the separation cylinder 14 faces an edge part 7e disposed radially inward of the dividing member 7.

The entire separation cylinder 14 may be integrally formed by injection molding of resin. Alternatively, the entrance side end part (upper part) 24 of the separation cylinder 14 and the central part 15 and the exit side end part (lower part) 16 of the separation cylinder 14 may be coupled after being molded separately from each other.

The separation cylinder 14 divides a flow of air sucked to the scroll housing 17 via the suction port 22 into a first air flow passing through a first passage 14A outside the separation cylinder 14 and a second air flow passing through a second passage 14B inside the separation cylinder 14. The first air flow passes through an annular region outward of an outer peripheral surface of the separation cylinder 14 in the first the suction port 22A of the suction port 22 of the scroll housing 17 and flows to a radially inward part of the first blade row 5A of the impeller wheel 2. The second air flow enters the inside of the separation cylinder 14 from the upper end of the separation cylinder 14 and flows to a radially inward part of the second blade row 6A. Accordingly, the annular region outward of the outer peripheral surface of the separation cylinder 14 in the suction port 22 of the scroll housing 17 can be regarded as a first inhalation port of the scroll housing 17 and the entrance side end part 24 of the separation cylinder 14 can be regarded as a second inhalation port of the scroll housing 17. The exit side end part 16 of the separation cylinder 14 redirects the first air flow having flowed to a radially outward direction and guides the first air flow to the first air flow path 18 via the first blade row 5A. In addition, the exit side end part 16 redirects the second air flow having flowed to a radially outward direction and guides the second air flow to the second air flow path 19 via the second blade row 6A.

The air intake part of the air conditioner has a housing 21. This housing 21 is referred to as the "air intake housing" to distinguish it from the scroll housing 17. The scroll housing 17 and the air intake housing 21 may be molded integrally with each other or may be coupled by a method such as screwing, bonding, or insertion after being created separately from each other. The scroll housing 17 and the air intake housing 21 are parts of an air conditioner casing. In a preferable embodiment, the separation cylinder 14 is a component separate from the scroll housing 17 and the air intake housing 21 and is supported at a predetermined position by the air intake housing 21.

The air intake housing 21 includes a first opening 25, a second opening 26, a third opening 27, and a fourth opening 28. Inside air (vehicle cabin inside air) can be introduced from a vehicle cabin space 29 (details are not illustrated) to the inner space 23 of the air intake housing 21 via the first opening 25 and the third opening 27. That is, the first opening 25 and the third opening 27 are first and second inside air introduction ports through which inside air is taken in to the air intake housing 21. In addition, outside air (air taken in from the outside of the vehicle) can be introduced from an exit 30 (details are not illustrated) of an outside air introduction passage provided in the vehicle to the inner space 23 of the air intake housing 21 via the second opening 26 and the fourth opening 28. That is, the second opening 26 and the fourth opening 28 are first and second outside air introduction ports through which outside air is taken in to the air intake housing 21.

By pivoting a door 31 about a rotational shaft 31A, inflow of air (inside air) from the first opening 25 to the air intake housing 21 can be allowed or interrupted. By pivoting a door 32 about a rotational shaft 32A, inflow of air (outside air) from the second opening 26 to the air intake housing 21 can be allowed or interrupted. By pivoting a door 33 about a rotational shaft 33A and switching between positions, air (inside air or outside air) can be introduced to the air intake housing 21 via any one of the third opening 27 and the fourth opening 28.

The air intake housing 21 and the separation cylinder 14 are formed so that almost all of the air introduced from the first opening 25 and/or the second opening 26 to the air intake housing 21 passes through the first passage 14A and almost all of the air introduced from the third opening 27 and/or the fourth opening 28 to the air intake housing 21 passes through the second passage 14B.

A filter 35 for removing contaminants such as dust and particles in air is provided in the air intake housing 21 between the region in which the first opening 25, the second opening 26, the third opening 27, and the fourth opening 28 are disposed and the entrance side end part 24 of the separation cylinder 14. The filter 35 is preferably includes a single filter element.

By the way, when the in-vehicle air conditioner is driven in the inside air/outside air two-layer flow mode, the first air flow (outside air) needs to be highly separated from the second air flow (inside air). For example, when the in-vehicle air conditioner is driven in the inside air/outside air two-layer flow mode, dry outside air is blown to the front glass to prevent the front glass from being fogged. However, mixture of damp inside air into the outside air to be blown to the front glass may reduce the effect of anti-fogging the front glass by the in-vehicle air conditioner.

In consideration of such situations, the centrifugal blower unit 1 illustrated in Fig. 1 to Fig. 3 is configured to improve separation between the first air flow and the second air flow. In particular, the centrifugal blower unit 1 illustrated in Fig. 1 to Fig. 3 is configured to prevent part of the second air flow from entering the first air flow path 18.

Generally, the impeller wheel to be accommodated in the scroll housing can be preferably assembled into the scroll housing from the side opposite to the suction port of the scroll housing. By assembling the impeller wheel and the motor to configure a fan motor assembly, the impeller wheel and the rotational axis of the motor can be fixed easily and surely. After that, by performing assembly so as to accommodate the impeller wheel in the scroll housing, the scroll housing and the fan motor assembly can be fixed easily and surely. If the scroll housing and the motor are assembled first and then the impeller wheel is assembled to the rotational axis of the motor, the impeller wheel needs to be inserted onto the rotational axis from the side close to the suction port. Accordingly, the diameter of the suction port that otherwise needs to be set to a value smaller than the inner diameter of the blade row of the impeller wheel is set to a value larger than the outer diameter of the blade row of the impeller wheel, thereby significantly reducing the blowing capability of the blower unit.

In consideration of such situations, the centrifugal blower unit 1 illustrated in Fig. 1 to Fig. 3 is configured so that the impeller wheel 2 can be assembled into the scroll housing 17 from the side (that is, from the opening 17c of the scroll body part 17a) opposite to the suction port 22 of the scroll housing 17.

The following describes the specific structure of the centrifugal blower unit 1 in which part of the second air flow is prevented from entering the first air flow path 18 and the impeller wheel 2 can be assembled into the scroll housing 17 from the side opposite to the suction port 22 of the scroll housing 17.

As illustrated in Fig. 3, in the radial direction of the impeller wheel 2, edge parts 5e of the first blades 5 present radially outward are positioned inward (radially inward) of a wall edge part 20e of the partitioning wall 20 that faces the impeller wheel 2 provided in the scroll housing 17. Accordingly, the plurality of first blades 5 can be disposed in (inserted into) the inner space of the scroll housing 17 close to the suction port 22 through the inside region surrounded by the wall edge part 20e of the partitioning wall 20 disposed radially inward from the side opposite to the suction port 22 (that is, from the opening 17c of the scroll body part 17a).

In addition, as illustrated in Fig. 3, in the radial direction of the impeller wheel 2, although an edge part 7z of the dividing member 7 present radially outward is positioned outward (radially outward) of the wall edge part 20e, the edge part 7z is positioned closer to the other end side (closer to the second air flow path 19) in the axial direction than the wall edge part 20e. Accordingly, when the impeller wheel 2 is assembled into the scroll housing 17 from the side opposite to the suction port 22 (that is, from the opening 17c of the scroll body part 17a), the partitioning wall 20 does not interfere with the dividing member 7, so the impeller wheel 2 can be disposed in an appropriate position in the scroll housing 17. In addition, since the dividing member 7 extends to a position below the partitioning wall 20, part of air blown out in the centrifugal direction from the second blade row 6A is prevented from flowing directly to the first air flow path 18 through the space between the dividing member 7 and the partitioning wall 20.

How to assemble the impeller wheel 2 illustrated in Fig. 1 to Fig. 3 into the scroll housing 17 will be described with reference to Fig. 4. First, the impeller wheel 2 to which the motor 13 has been assembled is inserted into the scroll body part 17a through the opening 17c of the scroll body part 17a. Since the outer diameter of the first blade row 5A of the impeller wheel 2 is smaller than the inner diameter of the partitioning wall 20, the first blade row 5A can be disposed in the inner space of the scroll body part 17a close to the suction port 22 through the inside region surrounded by the wall edge part 20e of the partitioning wall 20. In addition, the outer diameter of the dividing member 7 is larger than the inner diameter of the partitioning wall 20, but the dividing member 7 is disposed closer to the opening 17c than the partitioning wall 20. Accordingly, the dividing member 7 does not interfere with the partitioning wall 20, so the impeller wheel 2 can be disposed in an appropriate position in the scroll housing 17. Next, the scroll bottom part 17b is mounted to the scroll body part 17a so as to block the opening 17c while the motor 13 is accommodated in the inner space thereof. The impeller wheel 2 is assembled into the scroll housing 17 as described above. The impeller wheel 2 to which the motor 13 has been assembled and the scroll bottom part 17b may be mounted in advance and then the scroll bottom part 17b may be mounted to the scroll body part 17a.

In the centrifugal blower unit 1 illustrated in Fig. 1 to Fig. 3, the impeller wheel 2 can be assembled into the scroll housing 17 from the side (the side close to the second air flow path 19) opposite to the suction port 22 of the scroll housing 17 as illustrated in Fig. 4.

Next, the operation of the in-vehicle air conditioner illustrated in Fig. 1 to Fig. 3 will be described.

In a first operation mode of the in-vehicle air conditioner, the second opening 26 and the fourth opening 28 are opened and the first opening 25 and the third opening 27 are closed. This state is not illustrated. In this case, the outside air introduced from the second opening 26 forms the first air flow that passes through the first passage 14A outside the separation cylinder 14 and flows to the first blade row 5A of the impeller wheel 2. In addition, the outside air introduced from the fourth opening 28 forms the second air flow that passes through the second passage 14B inside the separation cylinder 14 and flows to the second blade row 6A of the impeller wheel 2. The first operation mode may also be referred to as the outside air mode.

In a second operation mode, the second opening 26 and the third opening 27 are opened and the first opening 25 and the fourth opening 28 are closed. This state is illustrated in Fig. 1 and Fig. 2. In this case, the outside air FE introduced from the second opening 26 forms the first air flow that passes through the first passage 14A outside the separation cylinder 14 and flows to the first blade row 5A. In addition, the inside air FR introduced from the third opening 27 forms the second air flow that passes through the second passage 14B inside the separation cylinder 14 and flows to the second blade row 6A. The second operation mode may also be referred to as the inside air/outside air two-layer flow mode.

The second operation mode (inside air/outside air two-layer flow mode) is used when, for example, operation in the defrost foot mode is performed. At this time, conditioned air having a relatively small moisture amount is blown out toward the front window (not illustrated) of the vehicle from the defrost blowout port of the vehicle cabin and conditioned air having a relatively large moisture amount is blown out toward the feet of occupants from the foot blowout port (not illustrated) of the vehicle cabin.

In a third operation mode, the first opening 25 and the third opening 27 are opened and the second opening 26 and the fourth opening 28 are closed. This state is not illustrated. In this case, the inside air introduced from the first opening 25 forms the first air flow that passes through the first passage 14A outside the separation cylinder 14 and flows to the first blade row 5A. In addition, the inside air introduced from the third opening 27 forms the second air flow that passes through the second passage 14B inside the separation cylinder 14 and flows to the second blade row 6A. The third operation mode may also be referred to as the inside air mode.

The first air flow having flowed to the first blade row 5A is blown out toward the first air flow path 18. In addition, the second air flow having flowed to the second blade row 6A is blown out toward the second air flow path 19. At this time, the dividing member 7 provided between the first blade row 5A and the second blade row 6A prevents part of the first air flow from flowing to the second air flow path 19 and prevents part of the second air flow from flowing to the first air flow path 18. Particularly in the centrifugal blower unit 1 illustrated in Fig. 1 to Fig. 3, since the dividing member 7 extends to a region below the partitioning wall 20, part of the air having blown in the centrifugal direction from the second blade row 6A is prevented from directly flowing to the first air flow path 18 through the space between the dividing member 7 and the partitioning wall 20.

As described above, in the centrifugal blower unit 1 illustrated in Fig. 1 to Fig. 3, separation between the first air flow and the second air flow of the air conditioner can be improved. Particularly in the centrifugal blower unit 1 illustrated in Fig. 1 to Fig. 3, mixture of the second air flow into the first air flow can be prevented effectively. As a result, inside air having a high humidity is prevented from being mixed into air to be blown to the front window in the centrifugal blower unit 1 when the air conditioner is operated in the inside air/outside air two-layer flow mode, so that the function of anti-fogging the front glass by the air conditioner does not degrade.

### [Second embodiment]

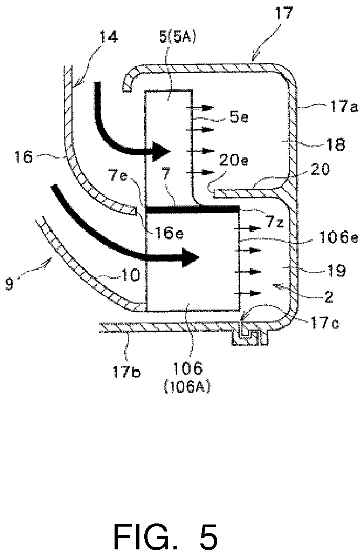

Next, the centrifugal blower unit according to the second embodiment will be described with reference to Fig. 5.

Fig. 5, which corresponds to Fig. 3, is a meridian cross sectional view illustrating the main part of the centrifugal blower unit according to the second embodiment. In the second embodiment illustrated in Fig. 5, although the dimensions of the second blades with respect to the partitioning wall are different, the other structure is substantially the same as in the first embodiment illustrated in Fig. 1 to Fig. 3. In the second embodiment illustrated in Fig. 5, the same components as in the first embodiment illustrated in Fig. 1 to Fig. 3 are given the same reference numeral and detailed description is omitted.

As illustrated in Fig. 5, in the case of the centrifugal blower unit according to the second embodiment, in the radial direction of the impeller wheel 2, edge parts 106e of second blades 106 present radially outward are positioned outward of the wall edge part 20e. That is, the second blades 106 extend to a position below the partitioning wall 20.

The centrifugal blower unit illustrated in Fig. 5 can also obtain the same effect as the centrifugal blower unit according to the first embodiment illustrated in Fig. 1. In addition, since the second blades 106 extend to a region below the partitioning wall 20 in the centrifugal blower unit illustrated in Fig. 5, a second blade row 106A blows out air below the partitioning wall 20. As a result, the air having blown out in the centrifugal direction from the second blade row 106A is more effectively prevented from passing through the space between the dividing member 7 and the partitioning wall 20 and flowing directly to the first air flow path 18.

### [Third embodiment]

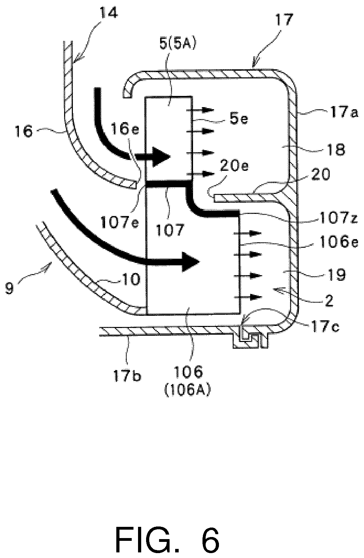

Next, the centrifugal blower unit according to the third embodiment will be described with reference to Fig. 6.

Fig. 6, which corresponds to Fig. 5, is a meridian cross sectional view illustrating the main part of the centrifugal blower unit according to the third embodiment. In the third embodiment illustrated in Fig. 6, although the shape of the dividing member is different and the shapes of the first blade and the second blade are different accordingly, the other structure is substantially the same as in the second embodiment illustrated in Fig. 5. In the third embodiment illustrated in Fig. 6, the same components as in the second embodiment illustrated in Fig. 5 are given the same reference numeral and detailed description is omitted.

As illustrated in Fig. 6, an edge part 107e of a dividing member 107 of the centrifugal blower unit according to the third embodiment present radially inward is positioned closer to one end side in the axial direction than the wall edge part 20e of the partitioning wall 20. More specifically, the dividing member 107 has the part extending from the edge part 107e of the inner diameter side to the outer diameter side in the first blade 5 in a position closer to one end side in the axial direction than the wall edge part 20e of the partitioning wall 20, the part continued from this part extending to the outer diameter side of the first blade 5 to one end side of the second blade row 106A, and the part extending from this part continued to one end side of the second blade row 106A to the part extending to an edge part 107z of the outer diameter side of the second blade row 106A in a position closer to the other end side in the axial direction than the partitioning wall 20.

The centrifugal blower unit illustrated in Fig. 6 can also obtain the same effect as the centrifugal blower unit according to the second embodiment illustrated in Fig. 5. In addition, since the edge part 107e of the dividing member 107 present radially inward is positioned closer to one end side in the axial direction than the wall edge part 20e of the partitioning wall 20 in the centrifugal blower unit illustrated in Fig. 6, the first air having flowed to the first blade row 5A is more effectively prevented from flowing to the second air flow path 19.

### [Fourth embodiment]

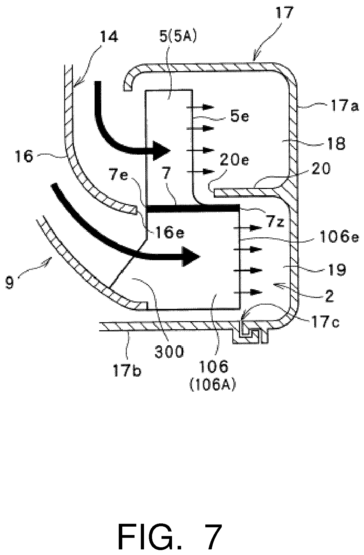

Next, the centrifugal blower unit according to the fourth embodiment will be described with reference to Fig. 7.

Fig. 7, which corresponds to Fig. 5, is a meridian cross sectional view illustrating the main part of the centrifugal blower unit according to the fourth embodiment. In the fourth embodiment illustrated in Fig. 7, although the shape of the second blades is different, the other structure is substantially the same as in the second embodiment illustrated in Fig. 5. In the fourth embodiment illustrated in Fig. 7, the same components as in the second embodiment illustrated in Fig. 5 are given the same reference numeral and detailed description is omitted.

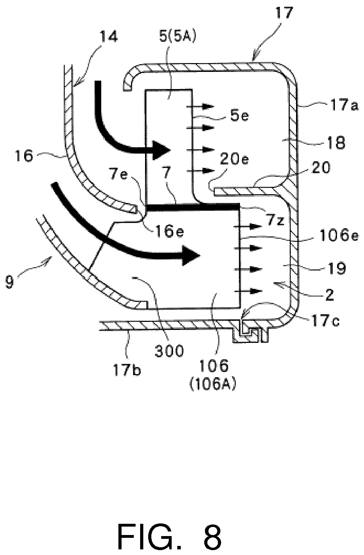

As illustrated in Fig. 7, the second blade 106 of the centrifugal blower unit according to the fourth embodiment has, in a position radially inward of the second blade row 106A, an extended connection part 300 extending toward the region between the exit side end part 16 of the separation cylinder 14 and the inside deflection member 9 in the width direction (radial direction) of the second blade 106. The extended connection part 300 is connected to the inside deflection member 9 at the other end in the axial direction thereof. It should be noted that the extended connection part 300 is not limited to substantially triangular illustrated in Fig. 7. For example, the extended connection part 300 may be substantially trapezoidal as illustrated in Fig. 8.

The centrifugal blower unit illustrated in Fig. 7 can also obtain the same effect as the centrifugal blower unit according to the second embodiment illustrated in Fig. 5. In addition, the strength of the second blades 106 can be improved in the centrifugal blower unit illustrated in Fig. 7.

### Description of Reference Numerals and Signs

1: centrifugal blower unit
2: impeller wheel
5: first blade
5A: first blade row
6: second blade
6A: second blade row
7: dividing member
13: motor
14: separation cylinder
17: scroll housing
17a: scroll body part
17b: scroll bottom part
17c: opening
18: first air flow path
19: second air flow path
20: partitioning wall
22: suction port
21: air intake housing
Ax: rotational axis line

## Claims

1. A single suction type centrifugal blower unit (1) for a vehicle, the centrifugal blower unit (1) comprising:
a motor (13);
an impeller wheel (2) rotationally driven about a rotational axis line (Ax) extending in an axial direction by the motor (13), the impeller wheel (2) including a plurality of first blades (5) forming a peripheral direction first blade row (5A), a plurality of second blades (6, 106) forming a peripheral direction second blade row (6A, 106A) and having one ends in the axial direction that face the other end in the axial direction of the first blade row (5A), the impeller wheel (2) blowing out air in a space radially inward of the first blade row (5A) and the second blade row (6A, 106A) in a centrifugal direction by being rotationally driven;
a dividing member (7, 107) formed circumferentially between the first blade row (5A) and the second blade row (6A, 106A), the dividing member (7, 107) separating spaces between the plurality of first blades (5) from spaces between the plurality of second blades (6, 106);
a scroll housing (17) including an inner space in which the impeller wheel (2) is accommodated, a suction port (22) opened to one end side in the axial direction, and a discharge port (170) opened in a peripheral direction;
a partitioning wall (20) dividing, in the axial direction, a region between an inner peripheral surface of the scroll housing (17) and an outer peripheral surface of the impeller wheel (2) of the inner space of the scroll housing (17) and an inner space of the discharge port (170) to form a first air flow path (18) facing the first blade row (5A) and a second air flow path (19) facing the second blade row (6A, 106A) ; and
a separation cylinder (14) passing radially inward of the suction port (22) and radially inward of the first blade row (5A) and extending in the axial direction, the separation cylinder (14) being provided so as to divide a flow of air sucked from the suction port (22) to the scroll housing (17) into a first air flow passing outside the separation cylinder (14) and a second air flow passing inside the separation cylinder (14), the separation cylinder (14) having an exit side end part (16) that redirects the first air flow to a radially outward direction and guides the redirected first air flow to the first air flow path (18) and redirects the second air flow to a radially outward direction and guides the redirected second air flow to the second air flow path (19),
wherein, in a radial direction of the impeller wheel (2), edge parts (5e) of the first blades (5) present radially outward are positioned inward of a wall edge part (20e) facing the impeller wheel (2) of the partitioning wall (20) and an edge part (7z, 107z) of the dividing member (7, 107) present radially outward is positioned outward of the wall edge part (20e) and closer to the other end side in the axial direction than the wall edge part (20e).

2. The centrifugal blower unit (1) according to claim 1,
wherein, in the radial direction of the impeller wheel (2), edge parts (6a, 106e) of the second blades (6, 106) present radially outward are positioned outward of the wall edge part (20e) .

3. The centrifugal blower unit (1) according to claim 1 or 2,
wherein an edge part (7e, 107e) of the dividing member (7, 107) present radially inward is positioned closer to one end side in the axial direction than the wall edge part (20e) .
